# EUROPEAN PATENT SPECIFICATION

(11) **EP 1 210 580 B1**
(45) Date of publication and mention of the grant of the patent: **05.08.2009**
(21) Application number: 00967400.3
(22) Date of filing: 16.08.2000
(51) Int. Cl.: G01N 21/25, B01D 1/00, G01N 21/47, G01N 21/53

(54) **SPRAY DATA ACQUISITION METHOD**
VERFAHREN ZUR DATENERFASSUNG EINES SPRAYS
PROCEDE D'ACQUISITION DE DONNEES DE PULVERISATION

(30) Priority: 17.08.1999 US 149281 P
(43) Date of publication of application: 05.06.2002
(73) Proprietor: Proveris Scientific Corporation, Marlborough, MA 01752 (US)
(72) Inventor: FARINA, Dino, J., Holliston, MA 01746 (US)
(74) Representative: Greenwood, John David
(86) International application number: PCT/US2000/040652
(87) International publication number: WO 2001/013092

(56) References cited:
- US-A- 3 275 744
- US-A- 4 614 300
- US-A- 4 628 465
- US-A- 5 075 014
- US-A- 5 561 527

## Description

### BACKGROUND OF THE INVENTION

The present invention relates to systems for and methods of characterizing aerosol spray patterns, and more particularly, to systems and methods that illuminate an aerosol spray plume and utilize optical techniques to characterize the associated spray pattern.

The fluid dynamic characterization of the aerosol spray emitted by metered nasal spray pumps and metered dose inhalers is crucial in determining the overall performance of the inhaler as a drug delivery device ("DDD"). In addition to treating direct respiratory ailments, inhaler-based DDDs are now increasingly being used to deliver drugs such as flu vaccines, insulin and migraine headache relievers because they deliver their dose of medication to tissues that can more efficiently absorb the drug and bring relief to patients more conveniently. Spray characterization is also an integral part of the regulatory submissions necessary for Food and Drug Administration ("FDA") approval of research and development, quality assurance and stability testing procedures for new and existing inhaler-based DDDs.

Thorough characterization of the spray's geometry has been found to be the best indicator of the overall performance of most inhaler-based DDDs. In particular, measurements of the spray's divergence angle (plume geometry), as it exits the device; the spray's cross-sectional ellipticity;uniformity and particle/droplet distribution (spray pattern); and the time evolution of the developing spray have been found to be the most representative performance quantities in the characterization of an inhaler-based DDD.

During research and development, these measurements are typically used to optimally match the spray pump's performance characteristics with the fluid properties of the liquid/solid medicine solution, resulting in a more cost-effective and efficient product design. However, accurate, reliable and easy-to-use protocols and a system for inhaler-based DDDspray characterization do not exist. During quality assurance and stability testing, plume geometry and spray pattern measurements are key identifiers for verifying consistency and conformity with the approved data criteria for the inhaler-based DDD.

The currently adopted inhaler spray testing standard that is in use today at pharmaceutical companies involves firing the spray pump at a solid, thin-layer chromatography ("TLC") plate having a coating that fluoresces in response to incident ultraviolet ("UV") radiation. The TLC plate is positioned at a fixed height above the exit port of the pump. The pattern of the spray deposited on the plate is then analyzed.

In a conventional test configuration, the analysis of an exposed plate begins with illumination of the plate with UV radiation. The incident UV radiation causes the plate's coating to fluoresce and helps to highlight the outline of the spray pattern. Marking instruments and mechanical calipers are then used to draw and measure an outline of the deposited patterns on the plate. Measurements of the spray pattern's ellipticity in terms or major- and minor-diameters are recorded.

One disadvantage to this configuration is that the presence of the TLC plate radically alters the natural fluid dynamics of the spray causing it to switch from a free aerosol jet to an impinging jet.

Another disadvantage to this configuration is that a large of amount of the spray particles bounce off the plate, causing artifacts in the pattern that do not exist in an unconstrained spray. This is specially problematic for dry powder-based DDDs because the particles don't tend to stick to the TLC plate at all causing artificially low spray pattern densities to be measured and reported.

Yet another disadvantage to this configuration is that the measurements of the spray pattern are very sensitive to the operator's judgement and prone to low reliability.

A further disadvantage to this configuration is that the associated measurement technique is restricted to measurements only of the static aspects of the spray pattern; it cannot be used to investigate any time-evolving or plume geometry properties of the spray.

It is an object of the present invention to substantially overcome the above-identified disadvantages and drawbacks of the prior art.

US-A-4,628,465 describes a method of measuring the shape of an injected substance and an automated apparatus for carrying out such a method. An optical image of the injected substance, such as atomized fuel mist is projected on a photoelectric converter, and it is converted to video signal. The video signal is sampled at each picture element and the sampled data are memorized in a data memory unit and computed for obtaining a linear luminance distribution function, by determining a line to cut an optical image, then selecting line elements of a fixed length perpendicular to the cut line and computing an average luminance at the individual line elements. The linear luminance distribution function thus obtained stands for a sectional view of a shape of the injected substance mist.; And judgment whether the shape is satisfactory or not can be executed on the basis of various shape factors extracted by use of the linear luminance distribution function. The apparatus can judge, whether, for example, nozzle of a fuel injector is satisfactory or not with high precise.

US-A-3,275,744 discloses an apparatus for spray analysis comprising a television camera positioned to view at least a portion of the spray to be analysed and a stroboscopic light source operative to emit a short duration light flash. the apparatus obtains an image representing the spray pattern at the instant of the flash.

The document Center for Drug Evaluation and Research (CDER):"Nasal Spray and Inhilation Solution, Suspension, and Spray Drug Products", May 1999 (1999-05) teaches that the plume geometry for inhilation sprays may be evaluated by a variety of procedures (e.g., the time sequence sound triggered high speed flash photography method, video tape recording and taking pictures of different frames) which should allow monitoring of the plume development to define the shape and the complete individual spray plume over time.

The document Center for Drug Evaluation and Research (CDER):"Metered Dose Inhaler (MDI) and Dry Powder Inhaler (D pi) Drug Products", October 1998 (199810) teaches the plume geometry of the sprays produced by such inhalers may be evaluated by a variety of procedures (e.g., the time sequence sound triggered high speed flash photography method, video tape recording and taking pictures of different frames). It also teaches the plume geometry assessment is complementary to a spray pattern test for the assessment of the performance of the valve and actuator of such devices.

The article by Wang G et al "An Optical Spray Pattern Analyzer" 10th Annual Conference on Liquid Atomization and Spray Systems, ILASS-Americas 97, May 1821, 1997 (1997-05-18) discloses an optical system which can measure the concentration distribution of fluid in a plane normal to the spray axis of a spray from an atomizer including illuminating the spray in that plane and detecting the light scattered from the fluid in that plane.

The present invention is a method of spray data acquisition as claimed in claim 1. Optional features are recited in the dependent claims.

### BRIEF DESCRIPTION OF DRAWINGS

The foregoing and other objects of this invention, the various features thereof, as well as the invention itself, may be more fully understood from the following description, when read together with the accompanying drawings in which:
FIG. 1 is a schematic showing a spray data acquisition system, useful with the method of the present invention;
FIG. 2. shows an illumination device illuminating a transverse axial cross-sectional slice of a spray in FIG. 1; and
FIG. 3 shows an illumination device illuminating a slice of a spray along the spray axis in FIG. 1.

### DESCRIPTION OF THE PREFERRED EMBODIMENTS

The method of spray data acquisition provides images of the time-evolution, particle distribution, and divergence angle of aerosol sprays The described spray data acquisition system, useful for performing the method of the present invention, is a non-intrusive, optical-based design system that is capable of capturing information representative of the time evolution of an aerosol spray for substantially complete geometrical (divergence angle and plume geometry) and pattern (cross-sectional uniformity and ellipticity) imaging. The modular hardware of the system allows easy customization to meet the needs of a variety of spray testing applications in research & development, stability testing and production environments.

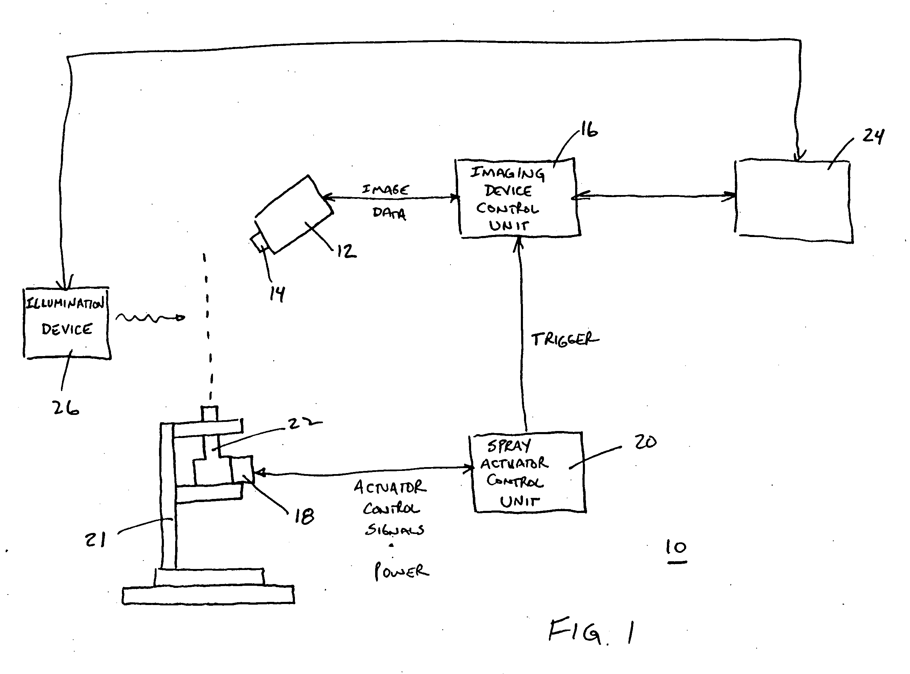

FIG. 1 shows a spray data acquisition system 10 which generates data representative of the characteristics of an aerosol spray as emitted from a spray pump 22. The system 10 includes a spray pump housing 21 for the spray pump 22, an actuator 18, an illumination device 26 and an imaging device 12. The spray pump housing 21 is provided to position the spray pump 22 so as to direct an aerosol spray through a port in the housing 21 along a spray axis SA.

The imaging device 12 of the data acquisition system 10 includes a camera head 14 and a control unit 16. Associated with the actuator 18 is a spray actuator control unit 20 and a force control element 19, responsive to the spray control unit 20, for controlling a pumping forte and a duration of an aerosol spray plume of the spray pump 22. The actuator 18 is preferably an electro-mechanical transducer that converts electrical control signals from the control unit 20, although other techniques known in the art for generating a pumping force may also be used, e.g., hydraulic, pneumatic, simple mechanical linkage, etc. The actuator 18 selectively activates the pump 22 to produce a spray plume for evaluation by the system 10. The centerline of the aerosol spray plume is shown as the spray axis SA.

The illumination device 26 is adapted to simultaneously or sequentially illuminate the spray with thin, fan-shaped beams of light along the spray axis SA and transverse to the spray axis SA. The imaging device 12 is adapted to acquire data representative of the optical density distribution of the portions of the spray illuminated by the illumination device 26. A first set of data is generated that is representative of a transverse cross-sectional slice of the spray plume. This set of data is useful in providing information relating to the spray divergence and the degree of spray uniformity in various directions radiating from the spray axis. A second set of data is generated that is representative of a slice of the spray along the spray axis. This set of data is useful in providing information on the spray divergence and the degree of spray uniformity along the spray axis and other axes diverging from the exit port.

The spray pump actuator 18, the force control element 19 and the control unit 20 are programmable so as to control key parameters associated with aerosol spray pumping, including pumping force and duration. In addition, the actuator 18 includes an output trigger signal that triggers the imaging device when the spray pump is actuated. Since the duration of the spray plume created by a single pumping of the pump 22 is only on the order of one second, it is crucial to have accurate synchronization between the spray pump actuator 18 and the imaging device 12. The InnovaSystems (Pennsauken, NJ) Nasal Spray Pump Actuator is an example of a preferable actuator for use with the present invention. The InnovaSystems actuator includes built-in programmability to control many of the key parameters involved with aerosol spray pumping described herein. In addition, the InnovaSystems actuator is equipped with a digital output signal that can trigger the imaging device when the pump is fired. This signal is compatible with the digital input trigger of the National Instruments PCI-1424 and Dalsa CA-D6-0256 (an example of a preferable image acquisition device 12) and provides nearly perfect synchronization for the system 10.

The imaging device 12 is preferably capable of an image acquisition speed (i.e. framing rate) and spatial resolution to accurately capture the time evolution of a spray for both geometry and pattern testing. The imaging device 12 preferably provides a framing rate in the neighborhood of 1000 frames/second (fps) at a resolution of 256x256 pixels and 8-bit intensity to accurately capture the time evolution of the spray for both the plume geometry and spray pattern testing. Such acquisition speed and spatial resolution values result in an 80 to 100 fold increase in the amount of pertinent information about the complete fluid dynamics of an aerosol spray plume compared to the TLC-plate method currently being used. As described herein, the combination of the PCI-1424 image acquisition board from National Instruments (Austin, TX) and the CA-D6-0256 high speed digital camera from Dalsa (Waterloo, Ontario, Canada) is an example of a preferable imaging device 12. The CA-D6-0256 has a programmable framing rate from 1 to 955 fps at a resolution of 256x256 pixels with 256 grayscales (8-bit). In addition, the PCI-1424 image acquisition board communicates directly with the camera and is capable of acquiring and displaying these images in a computer-based software system. Additionally, the camera is fitted with a Cinegon lens from Schneider Optics (Hauppauge, NY) that effectively focuses and transmits the laser light being reflected by the particles onto the camera's image sensors The power and wavelength specification of the preferred illumination device (the Magnum 4000, described herein) matches favorably to the spectral response of the Cinegon lens and the Dalsa CA-D6-0256. Thus, the preferred camera and laser combination produces bright images that clearly show the spray particles.

The illumination device 26 is preferably capable of illuminating time-evolving spray particles at a frame rate of approximately 500 fps. Preferably, the illumination device is a continuous-wave illuminant (but can also be strobed in unison with the image acquisition to provide better freezing of the in-flight particles) such as a laser sheet generator. Furthermore, the light from the illumination device 26 is capable of being shaped into a thin sheet for accurate illumination of the particles for both the spray pattern and divergence angle measurements. Preferably, the illumination device is capable of producing approximately 4W of illumination power and directly projecting a very thin sheet of light at a wavelength of 810 nm with a fan angle of 45° though other fan angles can be used depending on the situation. The Magnum 4000 laser sheet generator from Lasiris (St. Laurent, Quebec, Canada) is an example of a preferred illumination device 26. This solid-state diode laser produces 4W of illumination power and directly projects a very thin sheet of light at a wavelength of 810 nm, and is available with fan angles of 30, 45 and 60°.

In one preferred embodiment, the mechanical mounting hardware for the spray data acquisition system 10 is designed so that spray pump housing, the spray pump actuator 18, the illumination device26 and the imaging device 12 can be precisely, adjustably positioned and locked in place on a standard 2" thick optics bench. In this embodiment, the hardware also includes a custom designed calibration target to facilitate spatial calibration and perspective correction of the acquired images. In other embodiments, the various components of the spray data acquisition system 10 may be mounted relative to one another via other methods known to those in the art.

The control unit 16 of the imaging device 12 is responsive to the spray actuator control unit 20. In one embodiment, the control unit 16 of the imaging device 12 is connected to a computer system 24 for subsequent computer analysis of information acquired by the imaging device 12, so as to characterize the parameters associated with the spray plume being analyzed. Alternatively, the information gathered from the imaging device 12 can be analyzed according to other methods known to those of ordinary skill in the art.

In operation, the spray pump 22 is filled with test fluid and placed into the mouth of the actuator 18, which has been pre-calibrated for compression force and duration as per standard pharmaceutical spray testing guidelines. The imaging device 12 is set to capture at 500 fps giving a resolution of 256x256 pixels. The input trigger is armed and set to wait for the actuator 18 to fire. The illumination device 26 is turned on and its light sheet is focused to a thickness of approximately 1 mm when it illuminates the plane of spray particles.

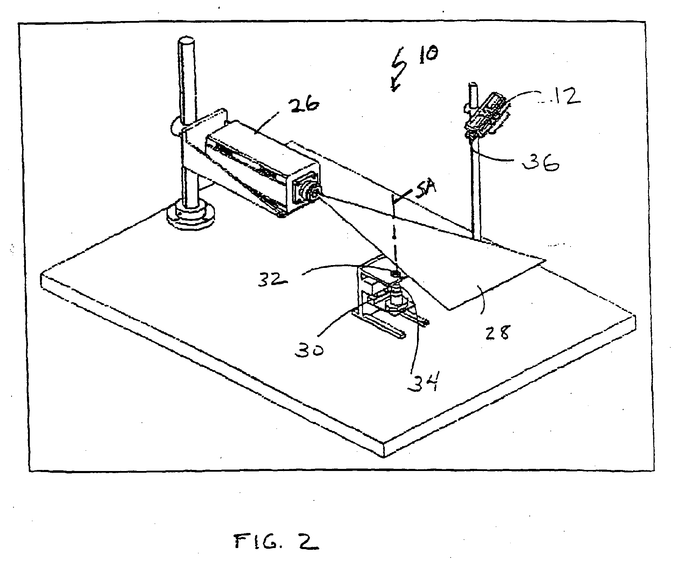

When the spray data acquisition system 10 is used to conduct spray pattern tests, the illumination device 26 is positioned so that it illuminates in a thin sheet 28 a predetermined, transverse axial cross section of the spray directly downstream of the spray pump tip 30 as shown in FIG. 2. The centerline of the aerosol spray plume is shown as spray axis SA. The imaging device 12 is positioned so that it can view the spray pattern from above at a slight off-axis angle to prevent the spray particles from directly impinging on the imaging device 12 and lens 36. A calibration target 32 is then temporarily placed in the plane of the illumination device's light sheet 28 and the imaging device lens 36 is adjusted until the target 32 comes into focus. An image of the focused target 32 is then captured with the imaging device 12 and can be downloaded to a computer or analyzed mechanically according to methods known to those of ordinary skill in the art. This target image 32 is used as a basis for calibrating the physical coordinate system of the spray pattern images and to perform the necessary perspective correction to the images to account for the off-axis viewing angle. The target image 32 is then removed from the scene and the trigger 34 is fired on the actuator 18 causing the imaging device 12 to start capturing the time-evolving images of the spray pattern. This takes about 2 seconds. Alternatively, the images can be analyzed according to methods known to those of ordinary skill in the art.

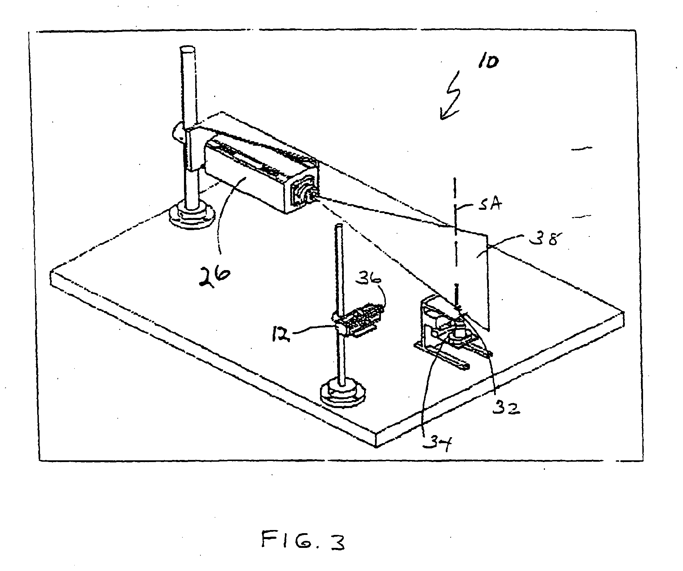

When the illustrated spray data acquisition system is used to conduct spray geometry tests, the illumination device 12 is positioned so that it illuminates a plane of particles parallel to the flow direction along the centerline of the spray or spray axis SA as shown in FIG. 3. The imaging device 12 is positioned perpendicular to the illumination device sheet plane 38. Similar to the spray pattern tests, the calibration target 32 is then temporarily placed in the plane of the sheet 38 of light emitted from the illumination device 26 and the imaging device lens 36 is adjusted until the target 32 comes into focus. Since in this case the imaging device 12 views the scene normally, no perspective correction is necessary so the target image 32 is used solely for calibrating the physical coordinate system of the spray geometry images. Again, the target image32 is then removed from the sceneand the actuator trigger 34 is fired. Alternatively, the images can be analyzed according to methods known to those of ordinary skill in the art.

The SprayVIEW Spray Characterization System User's Guide, Version 1.0, published by Image Therm Engineering, Inc., 1999, is an exemplary User's Manual for a spray data acquisition system. This user's guide is a manual for an entire spray characterization system, including information regarding acquisition, processing, set up, calibration, safety issues, et al. Thus, some of the information in the User's Manual is beyond the scope of this specification.

The present methods are to be considered in respects as illustrative and not restrictive, of the scope of the invention which is as claimed by the appended claims.

## Claims

1. A method of spray data acquisition comprising:
illuminating with an illumination device (26) an aerosol spray plume along only a first geometric plane that intersects the aerosol spray plume;
acquiring with an imaging device (12) data representative of a first interaction between the illumination and the aerosol spray plume along the first geometric plane;
illuminating with the illumination device (26) the spray plume along only a second geometric plane that intersects the aerosol spray plume, the first and the second geometric planes being substantially orthogonal;
acquiring with the imaging device (12) data representative of a second interaction between the illumination and the aerosol spray plume along the second geometric plane; and
producing image data representative of at least one time-sequential set of images of the spray plume, each of the images being representative of the density characteristic of the spray plume (i) along the selected geometric plane that intersects the spray plume, and (ii) at a predetermined instant in time; and wherein
a first time-sequential set of images corresponds to an axial cross-sectional density characteristic along a first geometric plane substantially normal to a flow direction centerline, and a second time-sequential set of images corresponds to a longitudinal density characteristic along, a second geometric plane substantially parallel to and intersecting the flow direction centerline.

2. The method according to claim 1, wherein the interaction between the illumination and the spray plume includes optical scattering.

3. The method according to claim 1, wherein the interaction between the illumination and the spray plume includes optical absorption.

4. The method according to claim 1, wherein a digital imaging system generates and records the image data.

5. The method according to claim 4, wherein the digital imaging system includes an image sampling rate of approximately 500 images per second.

6. The method according to claim 1, wherein a laser system having a fan-shaped output pattern illuminates the spray plume.

7. The method according to claim 6, wherein the fan-shaped output pattern includes a fan angle of approximately 45 degrees, and a laser line thickness of approximately one millimeter at approximately the centerline of the emitted spray.

8. The method according to claim 6 wherein the laser system includes a 4 watt, 810 nm laser output.

## Patentansprüche

1. Verfahren zur Datenerfassung eines Sprays, bei dem
mit einer Beleuchtungsvorrichtung (26) eine Aerosolsprayfahne entlang nur einer ersten geometrischen Ebene beleuchtet wird, die die Aerosolsprayfahne schneidet,
mit einer Abbildungsvorrichtung (12) Daten erfasst werden, die repräsentativ sind für eine erste Interaktion zwischen der Beleuchtung und der Aerosolsprayfahne entlang der ersten geometrischen Ebene,
mit der Beleuchtungsvorrichtung (26) die Sprayfahne entlang nur einer zweiten geometrischen Ebene beleuchtet wird, die die Aerosolsprayfahne schneidet, wobei die erste und die zweite geometrische Ebene im Wesentlichen orthogonal sind,
mit der Abbildungsvorrichtung (12) Daten erfasst werden, die repräsentativ sind für eine zweite Interaktion zwischen der Beleuchtung und der Aerosolsprayfahne entlang der zweiten geometrischen Ebene, und
Abbildungsdaten produziert werden, die repräsentativ sind für zumindest einen zeitsequentiellen Satz von Abbildungen der Sprayfahne, wobei jede der Abbildungen repräsentativ ist für die Dichtecharakteristik der Sprayfahne (i) entlang der gewählten geometrischen Ebene, die die Sprayfahne schneidet, und (ii) zu einem vorbestimmten Zeitpunkt, und wobei
ein erster zeitsequentieller Satz von Abbildungen einer Axialschnitt-Dichtecharakteristik entlang einer ersten geometrischen Ebene im Wesentlichen normal zu einer Fließrichtungsmittelünie entspricht und ein zweiter zeitsequentieller Satz von Abbildungen einer Längsdichtecharakteristik entlang einer zweiten geometrischen Ebene im Wesentlichen parallel zur Fließrichtungsmittellinie und diese schneidend entspricht.

2. Verfahren nach Anspruch 1, bei dem die Interaktion zwischen der Beleuchtung und der Sprayfahne eine optische Streuung aufweist.

3. Verfahren nach Anspruch 1, bei dem die Interaktion zwischen der Beleuchtung und der Sprayfahne eine optische Absorption aufweist.

4. Verfahren nach Anspruch 1, bei dem ein digitales Abbildungssystem die Abbildungsdaten erzeugt und aufzeichnet.

5. Verfahren nach Anspruch 4, bei dem das digitale Abbildungssystem eine Bildabtastfrequenz von etwa 500 Bildern pro Sekunde aufweist.

6. Verfahren nach Anspruch 1, bei dem ein Lasersystem mit einem fächerförmigen Ausgangsmuster dies Sprayfahne beleuchtet.

7. Verfahren nach Anspruch 6, bei dem das fächerförmige Ausgangsmuster einen Fächerwinkel von etwa 45° und eine Laserliniendicke von etwa 1 mm an etwa der Mittellinie des abgegebenen Sprays aufweist.

8. Verfahren nach Anspruch 6, bei dem das Lasersystem einen Laserausgang von 4 Watt, 810 nm aufweist.

## Revendications

1. Procédé d'acquisition de données de pulvérisation, comprenant les étapes consistant à :
éclairer au moyen d'un dispositif d'éclairage (26) un jet de pulvérisation aérosol uniquement suivant un premier plan géométrique qui coupe le jet de pulvérisation aérosol ;
acquérir au moyen d'un dispositif d'imagerie (12) des données renseignant sur une première interaction entre l'éclairage et le jet de pulvérisation aérosol suivant le premier plan géométrique ;
éclairer au moyen du dispositif d'éclairage (26) le jet de pulvérisation uniquement suivant un second plan géométrique qui coupe le jet de pulvérisation aérosol, le premier et le second plans géométriques étant sensiblement orthogonaux ;
acquérir au moyen du dispositif d'imagerie (12) des données renseignant sur une seconde interaction entre l'éclairage et le jet de pulvérisation aérosol suivant le second plan géométrique ; et
produire des données image sur au moins un ensemble chronologique d'images du jet de pulvérisation, chacune des images renseignant sur les caractéristiques de densité du jet de pulvérisation (i) suivant le plan géométrique sélectionné qui coupe le et de pulvérisation, et (ii) à un instant prédéterminé ; et **caractérisé en ce que**
un premier ensemble chronologique d'images correspond à une caractéristique de densité transversale suivant un premier plan géométrique sensiblement normal à l'axe d'écoulement, et un second ensemble chronologique d'images correspondant à une caractéristique de densité longitudinale suivant un second plan géométrique sensiblement parallèle à l'axe d'écoulement et passant par ledit axe.

2. Procédé selon la revendication 1, **caractérisé en ce que** l'interaction entre l'éclairage et le jet de pulvérisation comprend la diffusion de la lumière.

3. Procédé selon la revendication 1, **caractérisé en ce que** l'interaction entre l'éclairage et le jet de pulvérisation comprend l'absorption optique.

4. Procédé selon la revendication 1, **caractérisé en ce qu'**un système d'imagerie numérique génère et enregistre des données image.

5. Procédé selon la revendication 4, **caractérisé en ce que** le système d'imagerie numérique présente une cadence d'échantillonnage d'images d'environ 500 images par seconde.

6. Procédé selon la revendication 1, **caractérisé en ce que** le jet de pulvérisation est éclairé par un système laser à faisceau en éventail.

7. Procédé selon la revendication 6, **caractérisé en ce que** le faisceau en éventail présente un angle d'environ 45° et une épaisseur de rayon laser d'environ un millimètre à proximité de l'axe du jet émis.

8. Procédé selon la revendication 6, **caractérisé en ce que** le laser présente un faisceau laser de 4 watt et 810 nm.
